# EUROPÄISCHE PATENTSCHRIFT

(11) **EP 1 160 719 B1**
(45) Veröffentlichungstag und Bekanntmachung des Hinweises auf die Patenterteilung: **29.09.2010**
(21) Anmeldenummer: 01112769.3
(22) Anmeldetag: 26.05.2001
(51) Int. Cl.: G06K 7/12, G06K 7/10

(54) **Sensor für die Echtheitserkennung von Signets auf Dokumenten**
Sensor for authentication of bookmarks on documents
Capteur pour l'authentification de signets sur des documents

(30) Priorität: 03.06.2000 DE 10027726
(43) Veröffentlichungstag der Anmeldung: 05.12.2001
(73) Patentinhaber: Bundesdruckerei GmbH, 10969 Berlin (DE); Baumer Electric AG, 8501 Frauenfeld (CH)
(72) Erfinder: Ahlers, Benedikt Dr., 10997 Berlin (DE); Gutmann, Roland Dr., 14612 Falkensee (DE); Franz-Burgholz, Arnim, 14612 Falkensee (DE); Bailleu, Anett Dr., 13127 Berlin (DE); Paeschke, Manfred Dr., 16352 Basdorf (DE); Halter, Peter Dr., CH-8500 Frauenfeld (CH)
(74) Vertreter: Nüsse, Stephan

(56) Entgegenhaltungen:
- EP-A- 0 652 529
- EP-A- 0 762 309
- EP-A- 0 950 893
- DE-A- 4 320 177
- DE-A- 19 651 667
- US-A- 5 572 367
- US-A- 5 979 767

## Beschreibung

Die Erfindung betrifft einen Sensor für die Echtheitserkennung von Signets auf Dokumenten nach dem Oberbegriff des Patentanspruches 1. Ein derartiger Sensor ist in verschiedenen Ausführungsformen bekannt geworden. Mit dem Gegenstand der DE 41 17 011 A1 ist ein optischer Sensor bekannt geworden, bei dem insbesondere diffuse, intensitätsschwache Strahlungen erfasst werden sollen, wie sie auch bei der Prüfung von mit Lumineszenz-Merkmalen versehenen Banknoten auftreten.

Das Dokument EP 0 762 309 A2 offenbart einen Sensor zur Erkennung einer fluoreszierenden Markierung, wobei das von einer Strahlungsquelle erzeugte Licht strichförmig auf das am Sensor vorbeibewegte, abzutastende Objekt projiziert wird und das Fluoreszenzsignal ausgewertet wird.

Das dort beschriebene Sensorsystem besteht aus einem konisch aufgeweiteten Lichtfaserstab und einer weiterverarbeitenden Optik, wobei mit dem schmalen Querschnittsende des Faserstabes die vom Messobjekt kommende Strahlung in einem großen Raumwinkel erfasst werden kann. Die Strahlung tritt aufgrund der Querschnittswandlung unter einem wesentlich kleinerem Winkel, der auf den Öffnungswinkel der nachfolgenden Optik abgestimmt ist, aus dem Faserstab aus.

Mit einem derartigen Sensor ist es zwar möglich relativ intensitätsschwache Lumineszenz-Merkmale zu erfassen; jedoch kann die Stärke der erfassten Lumineszenz-Merkmale, wenn sie über eine größere Fläche verteilt sind, keine bestimmte Schwelle unterschreiten. Er ist also noch relativ unempfindlich. Aufgrund der Verwendung eines konisch ausgebildeten Faserstabes besteht nämlich der Nachteil, dass lediglich ein punktförmiger Bereich auf dem Dokument erfasst werden kann, was dann scheitert, wenn das zu untersuchende Element (auch Echtheitsmerkmal genannt) an anderen Stellen des Dokumentes angeordnet ist.

Überdies erfolgt die Anregung mit Hilfe von üblichen Lichtquellen mit sichtbarem Licht (zum Beispiel Glühlampen) was zu einem relativ schwachen Lumineszenz-Signal führt, welches von dem Faserstab erfasst und der Auswerteoptik zugeführt werden muss.

Der Erfindung liegt deshalb die Aufgabe zugrunde, einen Sensor für die Echtheitserkennung von Signets auf Dokumenten so weiterzubilden, dass lumineszierende Signets auf dem Dokument über einen wesentlich größeren Bereich auf dem Dokument hinweg erkannt werden können.

Zur Lösung der gestellten Aufgabe ist die Erfindung durch die technische Lehre des Anspruches 1 gekennzeichnet, der gegen EP 0 762 309 A2 abgegrezt ist.

Wesentliches Merkmal der Erfindung ist, dass ein von einer Strahlquelle ausgesandtes Strahlbündel durch eine Fokussierungsoptik derart umgewandelt wird, dass sich auf der Oberfläche des zu untersuchenden Dokuments eine etwa strichförmige Abtastlinie ergibt, die das auf dem Dokument angeordnete Echtheitsmerkmal zum fluoreszierenden Aufleuchten bringt und das so erzeugte Fluoreszenzsignal über eine Erfassungsoptik von einer Auswerteeinheit ausgewertet wird.

Zur Abgrenzung der einzelnen Begriffe voneinander wird der Begriff "Echtheitsmerkmal" allgemein als die Echtheit eines Dokumentes ausweisendes Merkmal verwendet, welches direkt auf dem Dokument selbst aufgebracht sein kann, welches aber auch im Bereich eines Signets angeordnet ist.

Der Begriff "Signet" beschreibt eine (z. B. durch Aufkleben aufgebrachte) lösbar oder unlösbar mit dem Dokument verbundene Marke oder ein Etikett, ein Siegel, einen abgegrenzten Bereich jeglicher Art oder einen Druckbereich auf einem Dokument, auf dem das Echtheitsmerkmal angeordnet ist. In der späteren Beschreibung wird offengelassen, ob sich das Echtheitsmerkmal unmittelbar auf dem Dokument selbst befindet oder Teil eines auf dem Dokument angebrachten Signets ist, welches trennbar oder untrennbar mit dem Dokument verbunden ist.

Mit der gegebenen technischen Lehre ergibt sich der wesentliche Vorteil, dass aufgrund der Erzeugung einer etwa strichförmigen Abtastlinie auf dem zu untersuchenden Dokument es nun erstmals möglich ist, nicht nur punktförmige Bereiche auf dem Dokument zu untersuchen, sondern einen gesamten linienförmigen Bereich, der sich in eine entsprechende Untersuchungsfläche umwandelt, wenn das Dokument mit einer bestimmten Geschwindigkeit an dem Messfenster etwa senkrecht zur Längsachse der Abtastlinie vorbeibewegt wird.

Damit ist es nun erstmals möglich, ein am Messfenster vorbeibewegtes Dokument über einen großen Bereich hin auf das Vorhandensein von Echtheitsmerkmalen zu untersuchen, weil das Dokument an dem Messfenster des Sensors vorbeibewegt wird und hierbei die auf der Dokumentenoberfläche projizierte Abtastlinie das Dokument über einen relativ großen Bereich abtastet. Damit kann das zu untersuchende Echtheitsmerkmal oder Signet über einen großen Bereich des Dokumentes verteilt angeordnet sein. Der Abtaststrahl ist so lang gewählt, dass das Signet mit Sicherheit im Bereich des Abtaststrahles auf dem Dokument angeordnet ist.

Es wird erfindungsgemäß der sogenannte Up-Conversion-Effekt angewendet. Hierbei ist die Anregungswellenlänge größer als die vom Echtheitsmerkmal ausgesandten reflektierten Wellenlänge. Im Frequenzbereich ausgedrückt heißt dies, dass die Anregungsfrequenz niedriger ist als die Antwortfrequenz.

Bei anderen Anregungsmechanismen, wie zum Beispiel unter Ausnützung des "normalen" Fluoreszenzeffektes, wird mit einer bestimmten Wellenlänge angeregt und das fluoreszierende Echtheitsmerkmal antwortet mit einer größeren Wellenlänge, was den entgegengesetzten Effekt zum erwähnten Up-Conversion-Effekt darstellt.

Die weiteren Merkmale der Erfindung ergeben sich aus der nachfolgenden stichwortartigen Zusammenstellung:

### Merkmale der Sensorik:

1. Der erfindungsgemäße Sensor eignet sich zur Montage in einer (Hochgeschwindigkeits-) Transportvorrichtung und kann auch als Scanner ausgebildet sein.
2. Er eignet sich zur Detektion eines Sicherheitsmerkmales, vorwiegend auf flachen Objekten.
3. Als detektierbares Sicherheitsmerkmal wird bevorzugt ein Signet, bestehend aus einer Farbe mit beigemischten Up-Conversion Pigmenten vorgeschlagen. Allenfalls können diese Pigmente auch in einer aufgebrachten Lösung, einem aufgebrachten Lack, dem Kleber oder dem Papier direkt beigemischt werden.
4. Der Sensor ist vorteilhaft zur Detektierung eines (z. B. aufgedruckten) Sicherheitsmerkmales mit kleinen Abmessungen (z. B. 5x5 mm) geeignet. Bei Aufbringung des Sicherheitsmerkmales durch Druck kann der Druck in relativ weiten Grenzen aufgebracht werden. Der geforderte Sensor-Messbereich muss deshalb das gesamte mögliche Druckfeld erfassen, obwohl das aufgedruckte Signet irgendwo in diesem Druckbereich aufscheinen kann und das Signet um ein Vielfaches kleiner ist als der Druckbereich.
5. Der Messbereich (Scanbereich, quer zur Transportrichtung) kann beispielsweise bis zu 70 mm groß sein, und eine Detektierung des kleinen Sicherheitsmerkmales erfolgt irgendwo innerhalb dieses großen Messbereiches.
6. Es erfolgt bevorzugt eine ortsaufgelöste Detektierung in Transportrichtung, jedoch nur optional eine Ortsauflösung in der Richtung quer zur Transportrichtung.
7. Die Geschwindigkeit in Transportrichtung variiert von Null bis 4 m/s.
8. Bevorzugt erfolgt auch eine Ausführung als Zweibereichssensor, bei dem eine einzige Beleuchtung das Testobjekt beleuchtet und bei dem zwei verschiedene spektrale Bereiche ausgewertet werden. Dabei werden die Empfangsstrahlen mittels eines Strahlteilers geteilt, je separat optisch gefiltert, mit unterschiedlichen Durchlaßwellenlängen und auf separaten Empfängern ausgewertet. Als Strahlteiler eignet sich ein dichroitischer Spiegel besonders. Alternativ könnte eine spektrale Messung erfolgen, bei der das Vorhandensein von einem, zwei oder mehreren spektralen Anteilen und ihres spektralen Aussehens sowie ihrer Intensität kontrolliert würde.
9. Als Ausführungsform kann ein integrierter UV-Lumineszenzsensor verwendet werden, bei dem das Testobjekt mit UV-Licht beleuchtet wird (z. B. mit UV-LED bei 370 nm Wellenlänge oder mit einer Entladungslampe) und in einem anderen spektralen Bereich das Lumineszenz-Signal detektiert wird. Dazu werden speziell angepasste optische Filter benötigt.
10. Als zusätzliches Merkmal kann ein integrierter oder externer Objektdetektor (optische Schranke) verwendet werden, der dem Sensor angibt, wann das Objekt (Signet) beginnt und wann es endet.
11. Bei Verwendung eines Synchronisationseinganges, der mit einem geschwindigkeitsproportionalen Schaltsignal gespeist wird, kann auch bei Geschwindigkeitsvariationen ein gewisser vorgegebener Teilausschnitt des Testobjektes allein untersucht werden bzw. können die in Transportrichtung ortsaufgelösten Messsignale mit diesem Synchronisationssignal synchronisiert werden.
12. Vorteilhaft werden Pigmente mit einer schnellen Anstiegs- und einer schnellen Abfallszeit (z. B. typisch 0,1 m/s) verwendet, um eine Detektion bei den gewünschten hohen Geschwindigkeiten zu erlauben. Es erfolgt natürlich eine Anpassung der elektronischen Auswertung an die charakteristischen Zeiten der Pigmente.
13. Von Vorteil ist im weiteren eine Abschattung von Fremdlicht durch mechanische Vorrichtungen.

### Merkmale der Beleuchtungsoptik (Laseroptik)

1. Es wird eine Laserwellenlänge 980+/- 10nm bevorzugt, in einer anderen Ausführung kann auch eine Wellenlänge von 950+/- 20nm verwendet werden. Es können aber auch LEDs oder andere Lichtquellen verwendet werden.
2. Die erfindungsgemäße Laserlinie wird erzeugt durch Fokussieren mit einer handelsüblichen Zylinderlinse oder durch Fokussieren mit einer normalen Linse und nachfolgendes Aufweiten mit einer Zylinderlinse. Auf diese Art wird eine Laserlinie erzeugt, deren Bestrahlungsstärke typischerweise in der Mitte der Abtastlinie am höchsten ist. Dies sowohl wegen der Abbildungsqualität der Zylinderlinse als auch wegen der Abstrahlcharakteristik der Laserdiode.
3. Die Laserlinie wird bevorzugt gemeinsam mit einer normalen Linse und mit einer asphärischen Zylinderlinse erzeugt oder alternativ gemeinsam mit einem Zylinderlinsenarray oder in einer anderen Alternative, gemeinsam mit einer sinus-wellenförmigen Linsenoberfläche; mit dieser Optik kann erreicht werden, dass die Bestrahlungsstärke einigermaßen homogen über die ganze Länge der Laserlinie verteilt oder leicht überhöht ist am Rand (oder ebenfalls in der Mitte), um die Empfindlichkeitsvariation des Empfängers über den Messbereich zu kompensieren.
4. Alternativ kann die "Laserlinie" durch mehrere Einzelstrahlen nachgebildet werden, die relativ dicht beieinander liegen, um die kleinen markierten Signets zu erkennen.
5. Bei Einsatz mehrerer Einzelstrahlen zur Nachbildung der Laserlinie kann die Fokussierung der Strahlen in der Objektebene so ausgebildet werden, dass eine leichte Defokussierung vorliegt, um für die Pigmente eine optimale Bestrahlungsstärke zu erreichen. Die "Lumineszenzeffizienz" variiert mit der Bestrahlungsstärke und hat meist ein Optimum bei hoher, jedoch nicht allzu hoher Bestrahlungsstärke. Bei zu hoher Bestrahlungsstärke kann die Signalstärke des empfangenen Lichtes wieder abfallen.
6. Eine Temperaturstabilisierung der Laserdiode kann zur Stabilisierung deren Wellenlänge eingesetzt werden, da die Fluoreszenzeffizienz bei Up-Conversion-Pigmenten stark wellenlängenabhängig ist.

### Merkmale der Auswertung

1. Es findet eine optische Filterung der im Empfänger unerwünschten Wellenlängen statt. Insbesondere wird in der hauptsächlichen Ausführung das eigentliche Laserlicht herausgefiltert und unterdrückt. Diese Unterdrückung wird bevorzugt sehr stark gewählt, zum Beispiel <10⁻⁷. Im weiteren wird einfallendes Tageslicht möglichst stark unterdrückt. Bevorzugt wird ein Interferenz-Bandpaßfilter mit 20 bis 100 nm Durchlassbreite eingesetzt und zusätzlich oder allenfalls an Stelle dieses Filters Kurz- und Langpassfilter mit geeigneten Grenzwellenlängen.
2. Zur Unterdrückung des Fremdlichtes wird das Laserlicht erfindungsgemäß gepulst und das empfangene Signal mit einem elektronischen Hochpassfilter gefiltert.
3. Zur weiteren Erhöhung der Erkennungssicherheit muss das Sicherheitsmerkmal während mindestens zwei oder gegebenenfalls einer größeren Zahl von Perioden erkannt werden, ansonsten wird es als ungenügend verworfen.
4. Die Störfestigkeit gegen Fremdlicht und elektronische Einstörungen wird weiter erhöht durch eine übliche oder, wie nachfolgend beschrieben, durch eine spezielle Ausführung einer synchronen Verstärkung. Zur Verwirklichung der synchronen Verstärkung erfolgt die Auswertung über eine Analogschaltung mit Sample-Hold-Gliedern. Die synchrone Verstärkung wertet nur Lichtsignale aus, die in Phase mit der Repetitionsfrequenz des ausgesandten Laserlichtes empfangen wird. Darüber hinaus kann die Signalauswertung weitere Details enthalten, wie z. B. Sampling des Signals nach Ablauf von 10% der Pulsdauer und Vergleich dieses Signals mit dem Signal nach Ablauf von 60-95% der Pulsdauer. Die Signalstärke des Vergleichssignals muss nun um einen gewissen Betrag größer sein, als der zuerst gesampelte Wert. Dazu müssen die gewählten Zeitfenster, hier 10% und 60-90%, an die Bandpassfrequenz der Elektronik und insbesondere an die Anstiegs- und Abfallszeiten der Pigmente angepasst werden. Die Kontrolle über diese Signale und Zeitsignale erfolgt vorteilhafterweise durch einen Mikroprozessor. Dasselbe Prinzip kann in der Pulspause erfolgen, mit dem Abfall des Signals. Diese spezielle Ausführung der synchronen Verstärkung ermöglicht gleichzeitig eine gewisse elektronische Unterdrückung des anregenden Laserlichtes, falls dieses nicht bereits vollständig durch die optischen Filter unterdrückt ist.
5. Alternativ kann die Auswertung unter Einsatz eines Mikroprozessors mit integriertem oder externem A/D-Wandler erfolgen. Das gleiche Auswerteprinzip kann dabei angewendet werden.
6. In einer alternativen Ausführung zur vorher beschriebenen Erfindung wird vorgeschlagen, anstelle einer einzigen Linse, eine Mehrzahl von Linsen zu verwenden, die übereinander gestapelt (bzw. als Reihe hinter dem MessFenster angeordnet) sind. Das Licht von jeder Linse wird dann durch je einen Reflexionskonus geführt und fällt auf je einen Empfänger. Die Signale können einzeln oder paarweise oder gesamthaft ausgewertet werden. Es kann auch eine Summenbildung erfolgen, deren Signal dann ausgewertet wird.
7. In einer anderen bevorzugten Ausführung wird eine koaxiale Optik vorgeschlagen. Bei dieser Ausführungsform werden die Sende- und Empfangsstrahlen über einen Strahlteiler, der allenfalls auch dichroitisch ist, zusammengeführt und verlassen das Sensorgehäuse gemeinsam. Dieser Strahlteiler wird mit Vorteil zwischen dem Optikkopf und dem Messfenster eingebaut. In dieser Ausführungsform ist die Empfindlichkeitsvariation mit dem Abstand vor dem Sensor kleiner.

Eine weitere bevorzugte Ausführungsform betrifft die Anordnung eines Stapels von Linsen mit kleiner Brennweite und hoher Apertur mit je einem Empfangselement. Die verschiedenen Linsen bilden je einen Teil der Laserlinie auf das zugehörige Empfangselement ab. Um viel Licht zu sammeln wird ein Abbildungsmassstab von 1:1 bevorzugt, ebenso eine Brennweite von 10 - 20mm. Der Abstand der Linse zum Objekt ist dann recht klein, was Streulichteinflüsse reduziert.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Draufsicht auf den Messsensor nach der Erfindung;
- Figur 2:: schematisiert die Darstellung des von der Strahlungsquelle ausgesandten Strahlbündels;
- Figur 3:: schematisiert die Darstellung der verschiedenen Strahlbündel, die von dem Echtheitsmerkmal zur Auswerteoptik hin ausgesandt und empfangen werden;
- Figur 4:: Ein Diagramm der Laseranregung und deren Antwort.
- Figur 5: Eine weitere Ausführung eines Sensors mit einer Seitenansicht auf den Empfängerkopf.

Erfindungsgemäß wird ein Laser als Strahllichtquelle verwendet. Die Beispiele, die ein oder mehrere LEDs oder die im allgemeinen Teil erwähnten Lichtquellen als Strahllichtquellen benutzen, sind keine Ausführungsform der Erfindung.

Im Fall der Verwendung eines Lasers wird die im allgemeinen Beschreibungsteil erwähnte Laserwellenlänge bevorzugt.

Die Verwendung eines Lasers hat im übrigen den Vorteil, dass die Abtastlinie mit relativ hoher Strahlungsintensität auf der Oberfläche des Dokumentes abgebildet wird, was bei der Verwendung von anderen Strahlquellen in nicht so hohem Maße geschieht.

Die Bestrahlungsstärke ist bei Verwendung von anderen Strahlquellen, insbesondere von LEDs, dann entsprechend niedriger. Für manche Anwendungszwecke kann dies aber ausreichen.

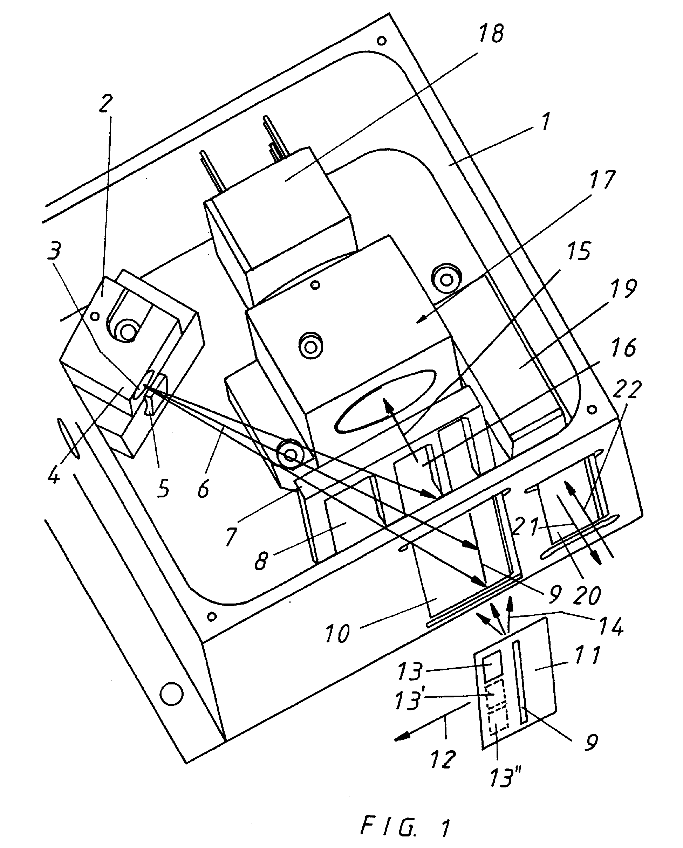

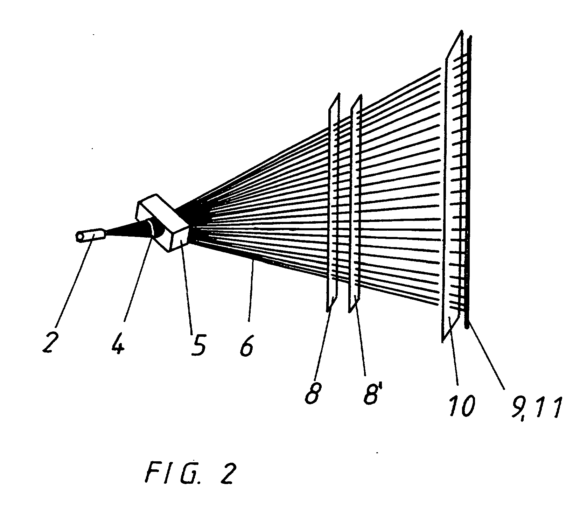

In Figur 1 ist allgemein in einem äußeren Gehäuse 1 ein Laser 2 in einem weiteren Gehäuse untergebracht, wobei in nicht näher dargestellter Weise im Innenraum des inneren Gehäuses eine Fokussierlinse 4 angeordnet ist (siehe auch Figur 2) und vor der Strahlöffnung 3 eine Zylinderlinse 5, welche das Strahlbündel 6 entsprechend aufweitet, so dass es in der eingezeichneten Pfeilrichtung auf das Messfenster 10 unter Bildung einer etwa strichförmige Abtastlinie 9 gestrahlt wird.

Das Messfenster 10 sei hierbei durch eine Glasscheibe abgeschlossen. Dicht vor dem Messfenster und praktisch berührend auf der Glasscheibe läuft das zu untersuchende Dokument 11 in Pfeilrichtung 12 vorbei, wobei auf dem Dokument ein Echtheitsmerkmal 13 in einem bestimmten Bereich angeordnet ist. Wichtig ist, dass das Echtheitsmerkmal 13 nun an verschieden Stellen, zum Beispiel auch an den Stellen 13' oder 13", angeordnet sein kann. Hier setzt die Erfindung ein, die vorsieht, dass die Länge der Abtastlinie 9 mindestens so groß ist, wie das äußerstenfalls auf dem Dokument zu erwartende Echtheitsmerkmal 13, 13', 13", so dass durch die Länge der Abtastlinie 9 stets dafür gesorgt ist, dass diese auch ein Echtheitsmerkmal 13 trifft, auch wenn dies an unerwarteter Stelle auf dem Dokument 11 angeordnet ist.

Der Vollständigkeit halber sei noch erwähnt, dass das Strahlbündel 6 durch ein Fenster 8 im Bereich einer mehrerer Fenster aufweisende Blende 7 hindurchgeht.

Das Echtheitssignet (Echtheitsmerkmal 13) arbeitet nach einem der vorgenannten Effekte und strahlt nach der Anregung der Abtastlinie 9 durch das Laserlicht in den eingezeichneten Pfeilrichtungen einen Reflexionsstrahl 14 durch das Messfenster 10 zurück, der in Pfeilrichtung 15 das Fenster 16 passiert.

Der Strahl in Pfeilrichtung 15 wird in einem Optikkopf 17 weiterverarbeitet und schließlich einer Auswerteeinheit 18 zugeführt. Diese Auswerteeinheit besteht bevorzugt aus einem Photomultiplier (Photovervielfachungsröhre).

Statt eines Photomultipliers können auch andere Auswerteeinheiten verwendet werden, wie zum Beispiel eine Matrix-Kamera, die mit einem CCD-Chip oder einem CMOS-Chip arbeitet, gegebenenfalls ergänzt um einen vorgeschalteten Restlichtverstärker.

In der Darstellung der Figur 1 ist der besseren Übersichtlichkeit halber dargestellt, dass das Dokument 11 einen bestimmten Abstand vom Messfenster 10 aufweist. Dieser Abstand ist in Wirklichkeit sehr klein, das Dokument 11 soll wenige Millimeter vor dem Messfenster 10 in Pfeilrichtung 12 vorbeibewegt werden.

Optional kann in dem Gehäuse 1 noch ein sogenannter Dokumentensensor 19 vorhanden sein, der bevorzugt als Lichtschranke ausgebildet ist. Es wird hierbei ein Messstrahl 21 auf das zu untersuchende Dokument geleitet und von diesem Dokument in Pfeilrichtung 22 als Reflektionsstrahl reflektiert und durch das Fenster 20 zurückgeworfen.

Hiermit wird festgestellt, ob überhaupt ein Dokument anwesend ist oder nicht. Danach wird erst die Laseroptik freigeschaltet, welche die vorgenannte Abtastlinie 9 auf der zu untersuchenden Dokumentenoberfläche 11 erzeugt.

Auch geschieht die Auswertung des Echtheitsmerkmals nur in der Zeit, in welcher der Dokumentensensor 19 das Vorhandensein eines Dokumentes überhaupt festgestellt hat.

In Figur 2 ist der Aufbau des von dem Laser 2 erzeugten Strahlbündels 6 noch näher dargestellt. Hierbei ist erkennbar, dass der vom Laser 2 erzeugte Strahl eine Fokussierlinse 4 passiert und erst dann von einer nachgeschalteten Zylinderlinse 5 strichförmig aufgeweitet wird. Danach wird er durch ein oder mehrere hintereinanderliegende Blenden 8, 8' derart begrenzt, dass er im Bereich des Messfensters 10 auf einem dahinterliegenden Dokument 11 die vorher erwähnte strichförmige Abtastlinie 9 erzeugt.

Wird ein Laser 2 verwendet, hat die Abtastlinie eine Breite von etwa 0,1-0,5 mm bei einer Länge von 70 mm.

Die Wellenlänge liegt hierbei vorzugsweise im Infrarotbereich.

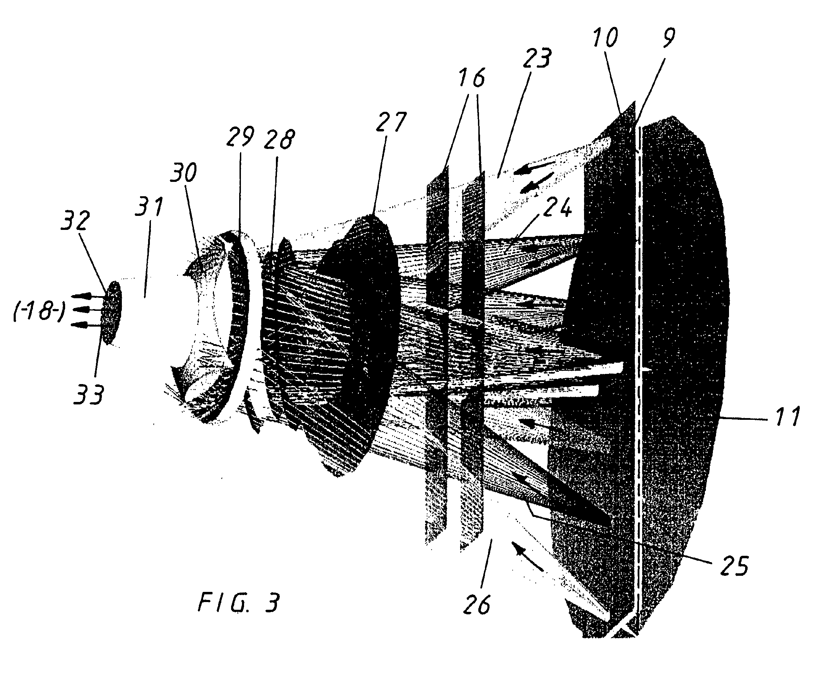

Die Figur 3 zeigt die Auswertung des von dem Echtheitsmerkmal reflektierten Lichtes. Jeder Punkt auf der Abtastlinie 9, der von Laserlicht angeregt wird, erzeugt seinerseits ein Strahlenbündel. Einige dieser Strahlenbündel sind in Figur 3 beispielhaft dargestellt, nämlich die Strahlenbündel 23-26. Diese werden durch zwei ineinandergeschaltete Blendenfenster 16 begrenzt. Bei entsprechender Anregung durch die Laser-Abtastlinie sind die außenliegenden Strahlenbündel 23, 26 die maximal möglich erzeugbaren Strahlenbündel.

Nach dem Durchtreten durch ein oder mehrere Blendenfenster 16 treten alle Strahlenbündel durch eine erste Blende 27 hindurch, die etwa rundprofiliert ist und die Strahlform begrenzt. Danach tritt das Strahlenbündel durch einen Filter 28 hindurch, der die durchzulassende Wellenlänge selektiert. Im Falle des beschriebenen Ausführungsbeispieles soll lediglich die Wellenlänge von 550 nm hindurchgelassen werden.

Danach durchläuft das Strahlbündel einen zweiten Filter 29, welcher weiteres Umgebungslicht absorbiert, um es nicht auf die Auswerteeinheit fallen zu lassen. Danach passiert das Licht eine Empfangslinse 30, die als Sammellinse ausgebildet ist und die das gesamte Strahlbündel auf einen Reflexionskonus 31 bündelt. Dieser Reflexionskonus ist ein metallisch beschichteter Hohlkörper, der sich vom Strahleintritt her in der Art eines Trichters verengt und der innen reflektierende Oberflächen trägt. Dies sorgt dafür, dass nicht nur die Strahlen den Reflexionskonus 31 passieren, die unmittelbar auf das Empfangselement abgebildet werden, sondern auch jene Strahlen auf das Empfangselement abgebildet werden, die schräg auf die Innenflächen des Reflexionskonus 31 treffen, dort reflektiert werden und sich mit dem direkten Hauptstrahl vereinigen.

Der Reflexionskonus verstärkt also den empfangenen Lichtstrahl wesentlich, weil nicht nur die direkten Strahlen, sondern zusätzlich auch schräg auf die Innenwände des Reflexionskonus 31 auftreffende seitliche Strahlen mit zur Auswertung herangezogen werden. Der Reflexionskonus erlaubt bei gegebenem Bildwinkel insbesondere eine Brennweite und eine grössere Apertur der Optik, als dies ohne den Konus möglich wäre.

Diese Verhältnisse gelten für die geometrische Darstellung in Figur 3, bei der das Signet relativ großflächig ausgebildet ist und eine Vielzahl von Strahlbündeln 23, 26 aussendet, wobei viele Strahlbündel (zum Beispiel die Bündel 23 und 26) randseitig liegen.

Ist das Signet hingegen kleinflächig ausgebildet, das heißt, wesentlich kleinflächiger als in Figur 3 dargestellt, dann ergeben sich bei Verwendung der nachstehend beschriebenen Merkmale weitere Vorteile im Hinblick auf die Auswertbarkeit.

Wenn man annimmt, dass ein kleinflächiges Signet lediglich im Bereich der Strahlbündel 25-26 auf dem Dokument 11 angeordnet ist, dann gelingt es auch unter Ausnützung des randseitigen Strahlbündels 25, 26, eine ausreichende Auswertegenauigkeit zu erzielen. Dieses Strahlbündel wird nämlich aufgrund der reflektierenden Innenseiten des Reflexionskonus 31 schräg reflektiert, dem Hauptstrahl beigefügt, damit verstärkt und verlässt in Pfeilrichtung als Austrittsstrahlenbündel 33 die Austrittsfläche 32.

Es wurde bereits schon vorstehend erwähnt, dass für die Auswerteeinheit 18 unterschiedliche Elemente verwendet werden können; in der folgenden Beschreibung wird von einem Photomultiplier ausgegangen. Es handelt sich hierbei um ein etwa eine 8 mm aktive Zone umfassendes rundes Element, welches direkt in Körperkontakt auf der Austrittsfläche 32 des Reflexionskonus 31 angeordnet ist und mit seinen Abmessungen etwa den Abmessungen der Austrittsfläche 32 entspricht.

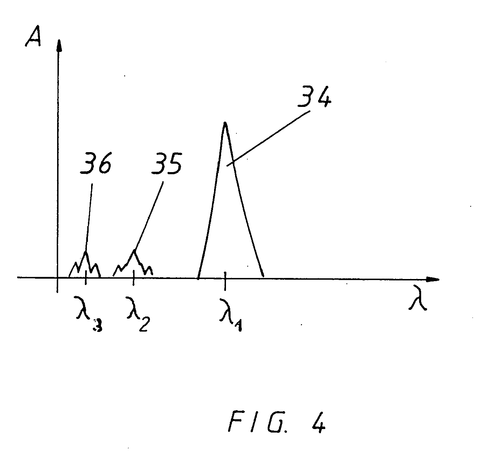

In Figur 4 wird allgemein ein möglicher Anregungsmechanismus nach der Erfindung nochmals graphisch dargestellt. Hierbei ist im Koordinatensystem auf der Ordinate die Amplitude des Strahls und auf der Abszisse die Wellenlänge angegeben. Es sei angenommen, dass die Laseranregung 34 bei einer bestimmten Wellenlänge λ₁ erfolgt und dass dann das Echtheitsmerkmal 13 mit einer entsprechenden Up-Conversion-Lumineszenz 35 mit einer niedrigeren Wellenlänge λ₂ antwortet. Diese Up-Conversion-Lumineszenz 35 wird von der Auswerteeinheit 18 erfasst und ausgewertet.

Neben einer einzigen Up-Conversion-Lumineszenz im Wellenlängenbereich λ₂ ist es durchaus möglich, dass noch weitere Up-Conversion-Lumineszenzen, beispielsweise mit der Wellenlänge λ₃ bei Ziffer 36, entstehen. Auch diese können gegebenenfalls von der Auswerteeinheit 18 erfasst werden.

Vorteil des beschriebenen Sensors ist, dass eine sehr hohe Transportgeschwindigkeit vom Stillstand bis auf 4 m pro Sekunde verwendet werden kann, so dass also eine sehr schnelle Auswertung von fluoreszierenden Echtheitsmerkmalen 13 auf entsprechenden Dokumenten 11 erfolgen kann.

Weiterer Vorteil ist, dass die gesamte Anordnung relativ unempfindlich gegen Streulicht ist, weil eine Anregung mit hoher Leuchtdichte erfolgt und dementsprechend auch ein Reflexionsstrahl 14 relativ hoher Leuchtdichte entsteht, der unempfindlich gegen Streulicht ist.

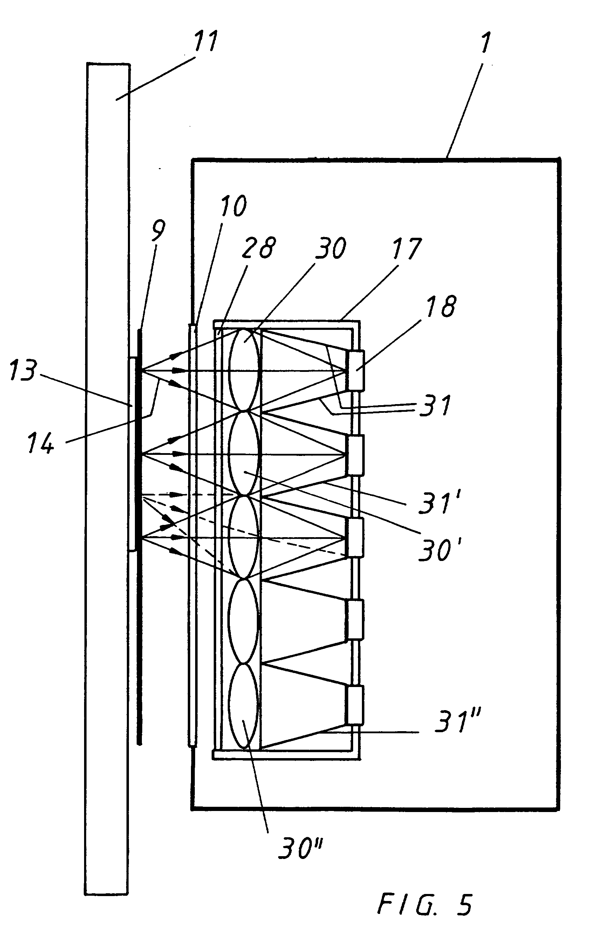

In Figur 5 sind die gleichen, vorher erwähnten Teile mit den gleichen Bezugszeichen versehen. Es ist ein Stapel von hintereinander in Reihe angeordneten Empfangslinsen 30, 30" vorhanden, wobei jede Empfangslinse einen Teil der Abtastlinie 9 abbildet.

Das Licht von jeder Linse 30, 30" wird dann durch je einen Reflexionskonus 31 geführt und fällt auf je einen Empfänger 18. Die Signale können einzeln oder paarweise oder gesamthaft ausgewertet werden. Es kann auch eine Summenbildung erfolgen, deren Signal dann ausgewertet wird.

### Zeichnungslegende

- 1: Gehäuse
- 2: Laser
- 3: Strahlöffnung
- 4: Fokussierlinse
- 5: Zylinderlinse
- 6: Strahlbündel
- 7: Blende
- 8: Fenster 8'
- 9: Abtastlinie
- 10: Messfenster
- 11: Dokument
- 12: Pfeilrichtung
- 13: Echtheitsmerkmal 13', 13"
- 14: Reflexionsstrahl
- 15: Pfeilrichtung
- 16: Blendenfenster
- 17: Optikkopf
- 18: Auswerteeinheit
- 19: Dokumentensensor (Lichtschranke)
- 20: Fenster
- 21: Messstrahl
- 22: Reflexionsstrahl
- 23: Strahlbündel
- 24: Strahlbündel
- 25: Strahlbündel
- 26: Strahlbündel
- 27: Blende
- 28: Filter
- 29: Filter
- 30: Empfangslinse
- 31: Reflexionskonus
- 32: Austrittsfläche
- 33: Austrittsstrahlenbündel
- 34: Laseranregung
- 35: Up-Conversion-Lumineszenz
- 36: Up-Conversion-Lumineszenz

## Patentansprüche

1. Sensor für die Echtheitserkennung von lumineszierenden Signets auf Dokumenten, mit dem das Signet mit einer Anregungswellenlänge bestrahlbar ist, das gegebenenfalls mit einer anderen Wellenlänge antwortet, wobei die Antwortwellenlänge von einem Strahlungsempfänger des Sensors erfassbar und auswertbar ist, und wobei ein von einer Strahlquelle des Sensors aussendbares Strahlbündel durch eine Fokussierungsoptik des Sensors derart umwandelbar ist, dass auf der Oberfläche des zu untersuchenden Dokuments eine etwa strichförmige Abtastlinie projizierbar ist, wobei mittels der strichförmigen Abtastlinie das auf dem mit bestimmter Geschwindigkeit am Sensor vorbeibewegbaren Dokument angeordnete Signet mindestens in einem Teilbereich zu einem fluoreszierenden Aufleuchten bringbar ist und das so erzeugbare Fluoreszenzsignal über eine Erfassungsoptik auf eine Auswerteeinheit des Sensors leitbar ist, mittels welcher das Fluoreszenzsignal auswertbar ist,
**dadurch gekennzeichnet,**
**dass** zur Erkennung des mindestens in Teilbereichen mit einem Pigment ausgerüsteten Signets auf einem Dokument, die Antwortwellenlänge unter Ausnützung des Up-conversion-Effektes des Pigments durch den Sensor erfassbar ist, wobei die von der Strahlungsquelle aussendbare Anregungswellenlänge größer als die vom Signet aussendbare, von der Auswerteeinheit auswertbare Wellenlänge ist, wobei die Strahlquelle in Form eines gepulsten Lasers gebildet ist und ein elektronischer Hochpassfilter vorgesehen ist, mit dem das empfangbare Signal filterbar ist.

2. Sensor nach Anspruch 1, **dadurch gekennzeichnet, dass** das Dokument etwa senkrecht zur Längsachse der Abtastlinie an einem Messfenster vorbeibewegbar ist.

3. Sensor nach Anspruch 1 oder 2, **dadurch gekennzeichnet, dass** die bestimmte Geschwindigkeit bis zu 4 m/s beträgt.

4. Sensor nach einem der Ansprüche 1 bis 3, **dadurch gekennzeichnet, dass** das Signet während mindestens zwei oder mehr Perioden erkennbar ist.

5. Sensor nach einem der Ansprüche 1 bis 4, **dadurch gekennzeichnet, dass** die Auswerteeinheit Sample-Hold-Glieder aufweist, die ausgelegt sind, nur Lichtsignale auszuwerten, die in Phase mit einer Repetitionsfrequenz eines ausgesandten Laserlichts empfangen sind.

6. Sensor nach einem der Ansprüche 1 bis 5, **dadurch gekennzeichnet, dass** die Pigmente in einer aufgebrachten Lösung, einem aufgebrachten Lack, dem Kleber oder dem Papier direkt beigemischt sind.

7. Sensor nach einem der Ansprüche 1 bis 6, **gekennzeichnet durch** eine ortsaufgelöste Detektierung in Transportrichtung des Dokumentes.

8. Sensor nach einem der Ansprüche 1 bis 7, **dadurch gekennzeichnet, dass** der Sensor mit einem Sensor-Messbereich ausgebildet ist, bei dem ein gesamtes mögliches Druckfeld des Dokumentes erfasst ist, wobei das Signet um ein Vielfaches kleiner als der Druckbereich ist.

9. Sensor nach einem der Ansprüche 1 bis 8, **dadurch gekennzeichnet, dass** der Messbereich quer zu einer Transportrichtung bis zu 70 mm groß ist und/oder ein Signet bis zu 5 x 5 mm groß ist.

10. Sensor nach einem der Ansprüche 1 bis 9, **gekennzeichnet durch** einen zusätzlichen Objektdetektor (optische Schranke), der dem Sensor angibt, wann das Objekt (Signet) beginnt und wann es endet.

11. Sensor nach einem der Ansprüche 1 bis 10, **dadurch gekennzeichnet, dass** die Auswerteeinheit ausgelegt ist, das Fluoreszenzsignal von Pigmenten mit einer schnellen Anstiegs- und einer schnellen Abfallszeit (z.B. typisch 0,1 m/s) auszuwerten.

12. Sensor nach einem der Ansprüche 1 bis 11, **dadurch gekennzeichnet, dass** die mit Zylinderlinsen des Sensors erzeugbare Laserlinie eine Bestrahlungsstärke aufweist, die ihr Maximum in der Mitte der Linie aufweist.

13. Sensor nach einem der Ansprüche 1 bis 12, **dadurch gekennzeichnet, dass** die Laserlinie mit einer asphärischen Zylinderlinse des Sensors erzeugbar ist.

14. Sensor nach einem der Ansprüche 1 bis 13, **dadurch gekennzeichnet, dass** die Laserlinie mit einer sinus-wellenförmigen Linsenoberfläche des Sensors erzeugbar ist.

15. Sensor nach einem der Ansprüche 1 bis 14, **dadurch gekennzeichnet, dass** zur Kompensation der Empfindlichkeitsvariation des Empfängers die Bestrahlungsstärke der Laserlinie leicht überhöht am Rand der Laserlinie ausgebildet ist.

16. Sensor nach einem der Ansprüche 1 bis 15, **dadurch gekennzeichnet, dass** zur Strahlverstärkung vor der elektronischen Auswerte-Einheit ein Reflexionskonus (31) angeordnet ist, der als trichter- oder zylinderförmiger Hohlkörper im Innenraum eine metallisch beschichtete Oberfläche aufweist oder als transparenter trichter- oder zylinderförmiger Vollkörper ausgebildet ist.

17. Sensor nach Anspruch 16, **dadurch gekennzeichnet, dass** unmittelbar hinter dem Reflexionskonus (31) ein Photomultiplier mit einer etwa punktförmigen Erfassungsfläche angeordnet ist, deren Fläche etwa der Austrittsfläche (32) des Reflexionskonus entspricht.

18. Sensor nach einem der Ansprüche 1 bis 17, **dadurch gekennzeichnet, dass** jeweils nur ein Teil der Abtastlinie (9) über jeweils eine Linse (20, 20") auf den Empfänger (18) abbildbar ist (Fig. 5), wobei sich die verschiedenen abgebildeten Teile der Abtastlinie gegenseitig überlappen.

19. Sensor nach Anspruch 18, **dadurch gekennzeichnet, dass** die Linsen (20, 20'') als Stapel dicht aneinander anliegend am Fenster (8, 8') des Gehäuses (1) angeordnet sind.

20. Sensor nach Anspruch 18 oder 19, **dadurch gekennzeichnet, dass** das Licht von jeder Linse (20, 20") durch je einen Reflexionskonus (31) führbar ist und auf je einen Empfänger (18) fallen kann.

## Claims

1. Sensor for the authentication of luminescent signets on documents, with which sensor the signet can be irradiated at an excitation wavelength and may respond at a different wavelength, wherein the response wavelength can be detected and evaluated by a radiation receiver of the sensor, and wherein a beam which can be emitted from a beam source of the sensor can be converted by focusing optics in such a manner that an approximately linear scanning line can be projected on the surface of the document to be investigated, wherein the signet arranged on the document, which can be moved past the sensor at a given speed, can be made to fluoresce at least in one subregion by means of the linear scanning line and the fluorescence signal produced in this way can be conveyed via detection optics to an evaluation unit, which can evaluate the fluorescence signal,
**characterised in that**
for recognising the signet on a document, which signet is provided at least in subregions with a pigment, the response wavelength can be detected by the sensor using the up-conversion effect of the pigment, the excitation wavelength which can be emitted from the beam source being greater than the wavelength which can be emitted from the signet and evaluated by the evaluation unit, the beam source being in the form of a pulsed laser and an electronic high-pass filter being provided, by means of which the receivable signal can be filtered.

2. Sensor according to claim 1, **characterised in that** the document can be moved past a measurement window approximately perpendicularly to the longitudinal axis of the scanning line.

3. Sensor according to either claim 1 or claim 2, **characterised in that** the given speed is up to 4 m/s.

4. Sensor according to any one of claims 1 to 3, **characterised in that** the signet can be recognised during at least two or more cycles.

5. Sensor according to any one of claims 1 to 4, **characterised in that** the evaluation unit comprises sample-and-hold members, which are configured to evaluate only light signals received in phase with a repetition frequency of an emitted laser light.

6. Sensor according to any one of claims 1 to 5, **characterised in that** the pigments are added directly to an applied solution, an applied lacquer, the adhesive or the paper.

7. Sensor according to any one of claims 1 to 6, **characterised by** a spatially resolved detection carried out in the transport direction of the document.

8. Sensor according to any one of claims 1 to 7, **characterised in that** the sensor is formed with a sensor measuring range in which the totality of a possible print area of the document is detected, the signet being many times smaller than the print region.

9. Sensor according to any one of claims 1 to 8, **characterised in that** the measuring range transverse to a transport direction is up to 70 mm long and/or a signet is up to 5 x 5 mm in size.

10. Sensor according to any one of claims 1 to 9, **characterised by** an additional object detector (optical barrier), which indicates to the sensor when the object (signet) starts and when it ends.

11. Sensor according to any one of claims 1 to 10, **characterised in that** the evaluation unit is designed to evaluate the fluorescence signal of pigments having a fast rise time and a fast decay time (for example, typically 0.1 m/s).

12. Sensor according to any one of claims 1 to 11, **characterised in that** the laser line which can be produced using cylindrical lenses of the sensor has an illumination intensity which exhibits its maximum in the centre of the line.

13. Sensor according to any one of claims 1 to 12, **characterised in that** the laser line can be produced using an aspherical cylindrical lens of the sensor.

14. Sensor according to any one of claims 1 to 13, **characterised in that** the laser line can be produced using a sinusoidal lens surface of the sensor.

15. Sensor according to any one of claims 1 to 14, **characterised in that**, in order to compensate for the sensitivity variation of the receiver, the illumination intensity of the laser line is increased slightly at the edge of the laser line.

16. Sensor according to any one of claims 1 to 15, **characterised in that** for beam intensification a reflection cone (31) is arranged in front of the electronic evaluation unit, which reflection cone is in the form of a funnel-shaped or cylindrical hollow body having a metallically coated surface on the inside, or is in the form of a transparent funnel-shaped or cylindrical solid body.

17. Sensor according to claim 16, **characterised in that** a photomultiplier having a detection area which is approximately in the form of a point and whose area corresponds approximately to the outlet area (32) of the reflection cone is arranged immediately behind the reflection cone (31).

18. Sensor according to any one of claims 1 to 17, **characterised in that** in each case only a portion of the scanning line (9) can be imaged onto the receiver (18) via a respective lens (20, 20") (Fig. 5), the various imaged portions of the scanning line overlapping one another.

19. Sensor according to claim 18, **characterised in that** the lenses (20, 20") are arranged as a stack, resting closely against one another, at the window (8, 8') of the housing (1).

20. Sensor according to either claim 18 or claim 19, **characterised in that** the light from each lens (20, 20") can be passed through a respective reflection cone (31) and can fall onto a respective receiver (18).

## Revendications

1. Capteur pour l'authentification de signets luminescents sur des documents, avec lequel le signet peut être irradié avec une longueur d'onde d'excitation, qui répond éventuellement avec une autre longueur d'onde, la longueur d'onde de réponse pouvant être captée et analysée par un récepteur de rayonnement du capteur, et un faisceau de rayons, qui peut être émis par une source de radiation du capteur, peut être transformé à travers un système optique de focalisation du capteur de telle sorte qu'une ligne de balayage sensiblement de la forme d'un trait interrompu peut être projetée sur la surface supérieure du document à analyser, le signet, qui est agencé sur le document qui est déplacé devant le capteur avec une vitesse déterminée, pouvant être amené à se mettre à briller d'une lumière fluorescente, au moins dans une zone partielle, et le signal fluorescent ainsi produit pouvant être guidé à travers un système optique de captage jusqu'à une unité d'analyse du capteur, au moyen de laquelle le signal fluorescent peut être analysé,
**caractérisé en ce que**
pour la reconnaissance du signet équipé, au moins dans une zone partielle, d'un pigment, sur un document, la longueur d'onde de réponse peut être captée par le capteur en utilisant l'effet de conversation ascendante du pigment, la longueur d'onde d'excitation pouvant être émise par la source de rayonnement est plus grande que la longueur d'onde qui peut être émise par le signet et qui peut être analysée par l'unité d'analyse, la source de rayonnement étant réalisée sous la forme d'un laser pulsé et un filtre passe-haut électronique étant prévu, avec lequel le signal, qui peut être reçu, peut être filtré.

2. Capteur selon la revendication 1, **caractérisé en ce que** le document peut être déplacé sensiblement perpendiculairement à l'axe longitudinal de la ligne de balayage devant une fenêtre de mesure.

3. Capteur selon la revendication 1 ou 2, **caractérisé en ce que** la vitesse déterminée est inférieure à 4 m/s.

4. Capteur selon l'une des revendications 1 à 3, **caractérisé en ce que** le signet peut être reconnu pendant au moins deux périodes ou plus.

5. Capteur selon l'une des revendications 1 à 4, **caractérisé en ce que** l'unité d'exploitation comporte des éléments d'échantillonnage-blocage, qui sont adaptés à exploiter uniquement les signaux lumineux, qui sont reçus en phase avec une fréquence de répétition d'une lumière laser émise.

6. Capteur selon l'une des revendications 1 à 5, **caractérisé en ce que** les pigments sont directement mélangés dans une solution appliquée, une laque appliquée, avec la colle ou avec le papier.

7. Capteur selon l'une des revendications 1 à 6, **caractérisé par** une détection avec une résolution locale dans la direction de transport du document.

8. Capteur selon l'une des revendications 1 à 7, **caractérisé en ce que** le capteur est réalisé avec une zone de mesure de capteur, dans le cas de laquelle un champ entier de pressions possible du document est capté, le signet étant largement plus petit que la zone de pression.

9. Capteur selon l'une des revendications 1 à 8, **caractérisé en ce que**, perpendiculairement à une direction de transport, la zone de mesure a une dimension allant jusqu'à 70 mm et/ou un signet a des dimensions allant jusqu'à 5 × 5 mm.

10. Capteur selon l'une des revendications 1 à 9, **caractérisé par** un détecteur d'objet additionnel (barrière optique), qui indique au capteur, quand l'objet (signet) commence et quand il se termine.

11. Capteur selon l'une des revendications 1 à 10, **caractérisé en ce que** l'unité d'analyse est adaptée à analyser le signal fluorescent des pigments avec un temps de montée rapide et un temps de descente rapide (par exemple typiquement 0,1 m/s).

12. Capteur selon l'une des revendications 1 à 11, **caractérisé en ce que** la ligne de laser qui peut être produite avec des lentilles cylindriques du capteur, présente une puissance d'irradiation, qui présente sa valeur maximale au milieu de la ligne.

13. Capteur selon l'une des revendications 1 à 12, **caractérisé en ce que** la ligne de laser peut être produite avec une lentille cylindrique asphérique.

14. Capteur selon l'une des revendications 1 à 13, **caractérisé en ce que** la ligne de laser peut être produite par une surface de lentille sinusoïdale du capteur.

15. Capteur selon l'une des revendications 1 à 14, **caractérisé en ce que** la puissance d'irradiation de la ligne de laser est légèrement surhaussée au niveau du bord de la ligne de laser, pour compenser la variation de sensibilité du récepteur.

16. Capteur selon l'une des revendications 1 à 15, **caractérisé en ce que**, pour augmenter le rayonnement avant l'unité électronique d'analyse, un cône de réflexion (31) est agencé, qui comporte, en tant que corps creux en forme de cylindre ou d'entonnoir, à l'intérieur, une surface avec un dépôt métallique ou qui est réalisé sous la forme d'un corps plein transparent en forme de cylindre ou d'entonnoir.

17. Capteur selon la revendication 16, **caractérisé en ce qu'**un photomultiplicateur avec une surface de détection sensiblement ponctuelle est agencé juste derrière le cône de réflexion (31), dont la surface correspond sensiblement à la surface de sortie (32) du cône de réflexion.

18. Capteur selon l'une des revendications 1 à 17, **caractérisé en ce que** seule une partie de la ligne de balayage (9), respectivement, peut être reproduite (Fig. 5) à travers une lentille (20, 20"), respectivement, sur le receveur (18), les différentes parties représentées de la ligne de balayage se chevauchant mutuellement.

19. Capteur selon la revendication 18, **caractérisé en ce que** les lentilles (20, 22") sont agencées, en tant qu'amoncellement, proches les unes des autres au niveau de la fenêtre (8, 8') du boîtier (1).

20. Capteur selon la revendication 18 ou 19, **caractérisé en ce que** la lumière de chaque lentille (20, 20") peut être guidée chacune à travers un cône de réflexion (31) et tomber chacune sur un receveur (18).
